# EUROPÄISCHE PATENTSCHRIFT

(11) **EP 0 584 457 B1**
(45) Veröffentlichungstag und Bekanntmachung des Hinweises auf die Patenterteilung: **06.09.1995**
(21) Anmeldenummer: 93107639.2
(22) Anmeldetag: 11.05.1993
(51) Int. Cl.: B60K 23/02, B60K 41/26

(54) **Verfahren und Vorrichtung zur geregelten Zu- und Abkopplung der Fahrkupplung im Getriebe eines Fahrzeuges**
Method and device for a regulated engagement and disengagement of a clutch in the transmission of a vehicle
Procédé et dispositif pour régler l'engagement et le disengagement d'un embrayage dans la transmission d'un véhicule

(30) Priorität: 26.08.1992 DE 4228378
(43) Veröffentlichungstag der Anmeldung: 02.03.1994
(73) Patentinhaber: Volkswagen Aktiengesellschaft, 38436 Wolfsburg (DE)
(72) Erfinder: Ramm, Norbert, Dipl.-Ing., W-3300 Braunschweig (DE); Zimmermann, Frank, Dipl.-Ing., W-3300 Braunschweig (DE)

(56) Entgegenhaltungen:
- DE-A- 3 809 118
- DE-A- 3 827 307
- DE-A- 3 920 245
- US-A- 4 648 289
- PATENT ABSTRACTS OF JAPAN vol. 015, no. 120 (M-1096)25. März 1991 & JP-A-03 009 161 (AISIN SEIKI) 17. Januar 1991
- PATENT ABSTRACTS OF JAPAN vol. 012, no. 087 (M-678)19. März 1988 & JP-A-62 225 427 (MITSUBISHI ELECTRIC) 3. Oktober 1987
- PATENT ABSTRACTS OF JAPAN vol. 11, no. 048 (M-561)13. Februar 1987 & JP-A-61 211 548 (TECH RES & DEV INST) 19. September 1986

## Beschreibung

Die Erfindung betrifft ein Verfahren und eine Vorrichtung Zur geregelten Zu- und Abkopplung der Fahrkupplung im Getriebe einer aus einem Antriebsmotor und einem elektrohydraulisch betätigbaren Automatikgetriebe bestehen Antriebseinrichtung eines Kraftfahrzeuges, insbesondere ein Verfahren und eine Vorrichtung zur Verminderung des Standschüttelns bei eingelegtem Gang und gebremsten Antriebsrädern, sowie zur Reduzierung des Anschalt- bzw. des Ausschaltstoßes durch die Antriebseinrichtung.

Beim Stillstand von Fahrzeugen mit automatischen Getrieben kommt es bei eingelegtem Gang und gebremsten Antriebsrädern zum sogenannten Standschütteln. Die Ursache für diese vom Fahrer eines Kraftfahrzeuges als unangenehm empfundenen Vibrationen besteht in der Verspannung des eine bestimmte Antriebsleistung anbietenden Antriebsaggregates gegenüber der diese Antriebsleistung abstützende und nicht an die Fahrzeugräder weiterleitende Fahrzeugkarosserie. Die Verspannung der Antriebseinrichtung wird somit durch die Wechselbeziehung zwischen dem Antriebsmoment der Antriebseinrichtung und dem Reaktionsmoment der Karosserie beschrieben.

Zur Vermeidung des Standschüttelns wird bei Antriebseinrichtungen nach dem Stand der Technik beim Stillstand des Fahrzeuges, bei eingelegtem Gang und gebremsten Antriebsrädern die Fahrkupplung des eingelegten Ganges ganz geöffnet, so daß keine Verspannung zwischen der Karosserie und der Antriebseinrichtung vorliegt. Soll aus diesem Zustand heraus angefahren werden, muß zuerst der Kupplungsleerweg abgebaut werden. In dieser Zeitspanne, in der die Fahrkupplung zwar schon zugeschaltet ist, aber noch nicht greift, kann der Antriebsmotor in seiner Drehzahl frei hochlaufen. Greift dann die Fahrkupplung endlich, so verspürt der Fahrer bei einer erhöhten Motordrehzahl und bei einem an sich zu großen Abtriebsdrehmoment des Motors einen unangenehmen Einkuppelruck. Dadurch wird deutlich, daß zur Vermeidung des Standschüttelns (vollständiges Öffnen der Fahrkupplung) lediglich ein anderer Fahrkomfortnachteil eingehandelt wird.

Sowohl das Standschütteln als auch der Einschaltstoß werden bei Antriebseinrichtungen mit Dieselmotoren als besonders nachteilig empfunden. Bei derartigen Antriebseinrichtungen sorgt in der Regel ein mechanischer Leerlaufdrehzahlregler dafür, daß der Motor auf einer Mindestdrehzahl gehalten wird. Bei nicht gelöster Fahrkupplung sorgt diese hohe Motordrehzahl und der vergleichsweise harte Motorlauf für besonders starke Vibrationen. Genau diese vergleichsweise hohe Leerlaufdrehzahl des Dieselmotors bewirkt beim Schließen einer zuvor geöffneten Fahrkupplung aber auch einen besonders harten Einschaltruck.

Aus der JP-A 300 9161 ist eine Steuereinrichtung für Brennkraftmaschinen bekannt, mit der Vibrationen oder Geräusche von Getrieben vermieden werden sollen. Zur Verhinderung des Entstehens derartiger Vibrationen wird vorgeschlagen, daß mittels eines in oder auf dem Getriebegehäuse angeordneten Beschleunigungssensors der Geräusch- oder Vibrationspegel ermittelt und einem Steuerungsrechner zugeleitet wird. In Abhängigkeit von den ermittelten Beschleunigungsdaten wird über ein Steuerventil eine Kupplung oder Bremse des Getriebes derart angesteuert, daß deren hydraulischer Steuerdruck abgesenkt wird. Auf diese Weise soll gemäß dieser Druckschrift das Enstehen von Vibrationen oder Geräuschen in dem Getriebe vermieden werden.

Demnach besteht die Aufgabe der Erfindung darin, ein Verfahren und eine Vorrichtung vorzustellen, mit dem das Standschütteln sowie der Ein- und Ausschaltstoß vermeidbar und somit der Fahrkomfort verbesserbar ist.

Die Lösung dieser Aufgabe ergibt sich aus den Merkmalen der Ansprüche 1 und 9. Vorteilhafte Weiterbildungen und Ausgestaltungen der Erfindung sind den Unteransprüchen entnehmbar.

Der Erfindung liegt die Erkenntnis zugrunde, daß bei der üblicherweise nicht starren Lagerung der Antriebseinrichtung auf der Karosserie in Abhängigkeit von der Weiterleitbarkeit des von der Antriebseinrichtung angebotenen Abtriebsdrehmomentes an die Antriebsräder eine Verspannung, und somit eine Verlagerung der Antriebseinrichtung gegenüber der Karosserie feststellbar ist.

Die Erfindung macht sich diese Verlagerung der Antriebseinrichtung gegenüber der Karosserie als Regelgröße nutzbar. Demnach wird erfindungsgemäß eine die Verspannung der Antriebseinrichtung gegenüber der Karosserie repräsentierende Größe gemessen und einer Getriebesteuerungseinrichtung zugeleitet. Beim Stillstand des Kraftfahrzeuges, eingelegtem Gang sowie bei gebremsten Antriebsrädern, oder beim Stillstand des Kraftfahrzeuges mit ausgekuppeltem Gang, oder beim Verzögern des Kraftfahrzeuges bis zum Stillstand mit eingelegtem Gang und beim Unterschreiten einer festgelegten Geschwindigkeits- und Lastschwelle wird der Steuerdruck in der Fahrkupplung des Getriebes von der Getriebesteuerungseinrichtung derart eingestellt, daß diese zu schleifen beginnt.

Über die Höhe des Schleifmomentes kann die Verspannung der Antriebseinrichtung gegenüber der Karosserie frei eingeregelt werden. Dadurch wird das Standschütteln vermieden und bei gelöster Bremse die Kriechneigung des Fahrzeuges vermindert. Gleichzeitig kann der Ein- und Ausschaltruck beim Einlegen und Herausnehmen des Fahrgangs vermindert und die Schaltung somit kontrolliert und sanft erfolgen.

Neben der Verlagerungsstrecke der Antriebseinrichtung gegenüber der Karosserie kann auch die Information über die Stützkraft in den Stützlagern der Antriebseinrichtung oder die Information über das aktuelle Abtriebsdrehmoment des Getriebes zur Steuerung der Fahrkupplung verwendet werden.

Bei dem erfindungsgemäßen Verfahren ist nicht von Bedeutung welche Getriebekupplung als Fahrkupplung gerade aktiviert ist, so daß das Standschütteln und der Ein- und Auschaltruck sowohl beim Betätigen des Vorwärts- als auch Rückwärtsgangs vermieden wird.

Da die Höhe des Schleifmomentes der Fahrkupplung von entscheidender Bedeutung für die Qualität des Schaltvorganges ist, kann in einer anderen Ausgestaltung der Erfindung vorgesehen sein, daß dieses Schleifmoment frei vorgewählt und als Kenngröße in der Getriebesteuerungseinrichtung abgespeichert wird. Die für dieses vorgewählte Schleifmoment maximal zulässige Verlagerungsstrecke zwischen der Antriebseinrichtung und der Karosserie wird so gewählt, daß sich die Antriebseinrichtung gegenüber der Karosserie in der Nähe ihrer Nullauslenkung befindet.

In einer weiteren Ausgestaltung der Erfindung ist vorgesehen, daß die maximal zulässige Verlagerungsstrecke der Antriebseinrichtung gegenüber der Karosserie von der Getriebesteuerungseinrichtung in festen Zeit- oder Fahrleistungsintervallen ermittelt wird, wobei der Verlagerungsweg der Antriebseinrichtung bei vollständig geöffneter und vollständig geschlossener Fahrkupplung festgestellt wird.

Des weiteren kann das erfindungsgemäße Verfahren auch in der Fahrsituation genutzt werden, in der aus dem Leerlauf heraus ein Gang eingelegt wird. Bei betätigter Bremse wird die bis dahin vollständig geöffnete Fahrkupplung soweit geschlossen, bis der Schleifpunkt der Fahrkupplung von der Getriebesteuerungseinrichtung an der einsetzenden Auslenkung der Antriebseinrichtung erkannt wird. Bei Erreichen der maximalen Verlagerungsstrecke wird die Fahrkupplung nicht weiter geschlossen und das dann erreichte Schleifmoment konstant gehalten. Wenn aus dieser Situation heraus die Bremse gelöst wird, wird der Druck der Fahrkupplung über eine Zeitrampe durch die Getriebesteuerungseinrichtung langsam angehoben. Dabei ist die Steigung der Zeitrampe von dem über das Fahrpedal oder über den Stellwinkel der Drosselklappe am Antriebsmotor signalisierten Fahrleistungswunsch des Fahrers abhängig. Auf diese Weise kann ein sanftes Anfahren mit hohem Fahrkomfort erreicht werden.

In einer vereinfachten Ausführungsform des erfindungsgemäßen Verfahrens kann die Reduzierung oder Anhebung des Steuerdrucks für die Fahrkupplung vom Hauptdruckniveau der elektrohydraulischen Steuerung des Getriebes auf den Schleifdruck für die Fahrkupplung durch gesteuertes Ein- und Ausschalten des Steuerventils für die Fahrkupplung erfolgen. Das in der Getriebesteuerungseinrichtung abgelegte maximale Schleifmoment oder die maximal zulässige Verlagerungsstrecke der Antriebseinrichtung läßt sich dabei in Abhängigkeit vom Hauptdruckniveau, den Druckteilern und dem Tastverhältnis des Steuerventils für die Fahrkupplung einstellen.

Die Erfindung betrifft auch eine Vorrichtung zur Durchführung des Verfahrens nach den Ansprüche 1 bis 8, die gemäß Anspruch 9 eine aus dem Antriebsmotor und dem elektrohydraulisch steuerbaren Getriebe bestehende Antriebseinrichtung beinhaltet. Diese Antriebseinrichtung ist über elastische Stützlager mit der Karosserie des Kraftfahrzeuges verbunden. Der Antriebseinrichtung folgt ein Differentialgetriebe, von dem zwei Antriebswellen abzweigen, die über Radbremsen mit vorzugsweise zwei Antriebsrädern verbunden sind. Die erfindungsgemäße Vorrichtung umfaßt außerdem eine elektrohydraulische Steuerungseinrichtung zur Betätigung der Stellglieder des Getriebes, die in Verbindung mit einer Getriebesteuerungseinrichtung steht.

Bezüglich der Vorrichtung zur Durchführung des Verfahrens ist erfindungsgemäß vorgesehen, daß die Getriebesteuerungseinrichtung über Steuer- und/oder Datenleitungen mit einem Sensor zur Messung einer die Verspannung der Antriebseinrichtung gegenüber der Karosserie repräsentierenden Größe, mit einem Stellwinkelsensor an der Motordrosselklappe, mit einem Bremslichtschalter, mit einem Meßgeber für die Fahrzeuggeschwindigkeit, mit einem weiteren Meßgeber für die Fahrzeugbeschleunigung sowie mit der elektrohydraulischen Steuerungseinrichtung des Getriebes verbunden ist.

In einer vorteilhaften Ausführung der Vorrichtungserfindung ist vorgesehen, daß zur Messung der Verspannung ein Wegsensor als ein berührungslos arbeitendes System aus einem Dauermagnet und einem Magnetfeldsensor besteht.

Anstelle des oben beschriebenen Wegsensors kann zur Messung der Verspannung zwischen der Antriebseinrichtung und der Karosserie auch ein Drehmomentsensor an der Getriebeabtriebswelle oder ein Stützkraftsensor in dem oder den Stützlagern der Antriebseinrichtung vorgesehen werden.

In einer anderen Ausführungsform kann die Verspannung zwischen der Antriebsanordnung und der Karosserie auch über Drehzahländerungen mittels eines Drehzahlsensors ermittelt werden, der am Sonnenrad des als Planetenwechselgetriebe ausgebildeten Getriebes 2 angeordnet ist.

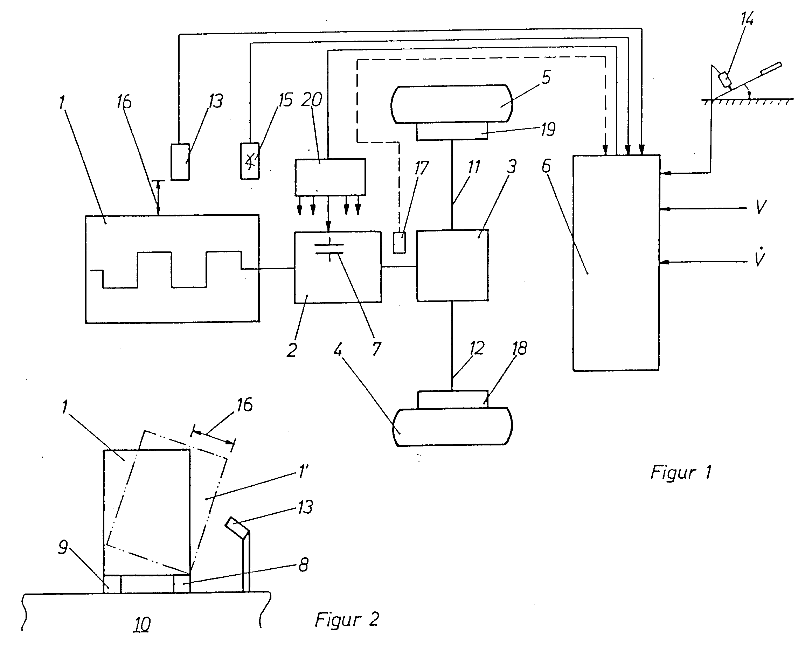

Das erfindungsgemäße Verfahren und die Vorrichtung zur Durchführung des Verfahrens lassen sich mit Hilfe eines Ausführungsbeispiels erläutern. Zur Veranschaulichung der Ausführungen dienen die Figuren 1 und 2. Es zeigen
- Figur 1: eine schematische Gesamtansicht der Antriebseinrichtung und der mit dieser Antriebseinrichtung verbundenen Steuerungseinrichtung und
- Figur 2: eine schematische Darstellung der Verlagerungsbewegung der Antriebseinrichtung.

Die in Figur 1 dargestellte Antriebseinrichtung setzt sich zusammen aus einem Antriebsmotor 1 und einem Getriebe 2, die fest miteinander verflanscht und über flexible Stützlager 8, 9 mit der Karosserie 10 des Fahrzeuges verbunden sind. Dem Getriebe 2 ist ein Differentialgetriebe 3 antriebstechnisch nachgeordnet, von dem zwei Antriebswellen 11, 12 abzweigen. An den jeweiligen Enden der Antriebswellen 11, 12 sind über Radbremsen 18, 19 die Antriebsräder 4, 5 befestigt.

Das Getriebe 2 ist als elektrohydraulisch steuerbares Automatikgetriebe ausgebildet, das über eine elektrohydraulische Steuerungseinrichtung 20 betätigbar ist. Diese hydraulische Getriebesteuerungseinrichtung erhält ihre steuerungsbefehle von einer Getriebesteuerungseinrichtung 6, die ihrerseits über einen Wegsensor 13 Informationen über die Verlagerung der Antriebseinrichtung gegenüber der Karosserie erhält, mittels eines Bremslichtschalters 14 über die Aktivierung oder Passivierung der Bremse informiert wird, und von einem Sensor 15 den Stellwinkel der Drosselklappe am Antriebsmotor erfährt. Außerdem erhält diese Getriebesteuerungseinrichtung die Information über die aktuelle Fahrzeuggeschwindigkeit V und die daraus berechnete aktuelle Fahrzeugbeschleunigung V̇.

Anstelle des Wegsensors 13 zur Messung der Verlagerung der Antriebseinrichtung gegenüber der Karosserie kann auch ein Drehmomentsensor 17 zur Ermittlung der Verspannung der Antriebseinrichtung gegenüber der Karosserie an der Abtriebswelle des Getriebes 2 oder ein Sensor zur Messung der Kraft in dem oder den Stützlagern 8, 9 vorgesehen werden, da diese Informationen den gleichen Aussagewert beinhalten.

In Figur 2 ist ein Querschnitt durch die Antriebseinrichtung, insbesondere durch den Antriebsmotor 1 dargestellt. Die durch die Verspannung zwischen der Antriebseinrichtung und der Karosserie 10 eintretende Verlagerung der Antriebseinrichtung wird mit Hilfe des Wegaufnehmers 13 am elastischen Stützlager 8, 9 gemessen. Als Sensor wird in einer vorteilhaften Ausführungsform der Erfindung ein berührungslos arbeitendes System aus einem Dauermagnet und einem Magnetfeldsensor verwendet. Änderungen im Abstand zwischen dem Magnet an der Antriebseinrichtung und dem Sensor werden direkt in ein elektrisches Signal umgesetzt und der Getriebesteuerungseinrichtung zugeleitet.

In einer besonders vorteilhaften Ausgestaltung der Erfindung wird jeweils bei geöffneter Fahrkupplung 7 und geschlossener Drosselklappe die Nullage, das heißt die Lage der nicht ausgelenkten Antriebseinrichtung, gemessen und der Getriebesteuerungseinrichtung 6 zugeleitet. Wenn nun vom Fahrer ein Gang eingelegt und die Bremse betätigt wird, so wird der Kupplungsdruck über ein Proportionalventil in der elektrohydraulischen Steuerungseinrichtung 20 langsam erhöht, so daß sich die Kupplung 7 langsam in Richtung ihres Schleifpunktes schließt. Bei Erreichen des Schleifpunktes entsteht abhängig von dem Anpreßdruck der Fahrkupplung 7 ein Schleifmoment, dessen Reaktionsmoment durch die Auslenkung der Antriebseinrichtung 1, 2 bestimmt werden kann. Die Höhe des Reaktionsmomentes ist dann über die Variation des Kupplungsdruckes von der Getriebesteuerungseinrichtung eingeregelbar.

Um Veränderungen in der Lagerung der Antriebseinrichtung zum Beispiel durch Montagetoleranzen oder der Alterung der Stützlager 8, 9 berücksichtigen zu können, ist eine adaptive Anpassung zwischen dem Reaktionsmoment und der gemessenen Verlagerungsstrecke 16 vorgesehen. Im Neuzustand wird daher die Lage der Antriebseinrichtung bei voll geöffneter und bei voll geschlossener Kupplung 7 gemessen. Das zulässige Verspannungsmaß ergibt sich dann als Bruchteil von dem Wert bei geschlossener Kupplung. Die ermittelten Werte für die minimale, maximale und zulässige Auslenkung der Antriebseinrichtung gegenüber der Karosserie werden im Rechnerspeicher der Getriebeantriebseinrichtung abgelegt und in festen Zeitintervallen oder nach zuvor festgelegten Fahrleistungsintervallen erneut automatisch bestimmt.

Ein besonderer Vorteil der Erfindung besteht darin, daß durch die Messung der Verlagerung der Antriebseinrichtung auch der Einkuppelvorgang beim Einlegen eines gewählten Gangs geregelt durchgeführt werden kann. Dieser Einkuppelvorgang stellt nur einen Sonderfall des weiter oben beschriebenen Standabkopplers dar. In der Wählhebelstellung Neutral des Automatikgetriebes ist zwangsweise die Fahrkupplung geöffnet, und die Nullage der Antriebseinrichtung ist dabei identisch mit der Nullage während des Standabkoppelvorgangs. Beim Einlegen eines Fahrgangs (Vorwärts oder Rückwärts) erfolgt der Druckaufbau in der Fahrkupplung kontrolliert durch die Getriebesteuerungseinrichtung, bis der Schleifpunkt durch die Auslenkung der Antriebseinrichtung und ihre Messung durch den Wegsensor 13 erkannt und an die Getriebesteuerungseinrichtung weitergeleitet wird.

Sobald die Getriebesteuerungseinrichtung 6 über den Meßgeber 15 für den Drosselklappenwinkel am Antriebsmotor 1 und/oder über den Bremslichtsensor 14 am Bremspedal erkennt, daß von Null-Gas auf Beschleunigen umgeschaltet worden ist, wird der Druck in der Fahrkupplung 7 über eine Zeitrampe auf den erforderlichen Wert angehoben. Die Geschwindigkeit mit der der Kupplungsdruck angehoben wird hängt dabei vom Fahrleistungswunsch des Fahrers des Kraftfahrzeuges ab.

Das erfindungsgemäße Verfahren bezieht sich neben der Nutzung als Standabkoppler auch auf die Nutzung als Fahrabkoppler. In dieser Betriebsweise ermöglicht das Verfahren einen komfortablen Übergang vom Fahrbetrieb in den ausgekuppelten Zustand bis hin zum Stillstand. Auch in einer solchen Fahrsituation wird das Antriebsaggregat 1 in seine Position 1' ausgelenkt. Die Verlagerungsstrecke 16 wird dabei wiederum von dem Wegsensor 13 ermittelt und der Getriebesteuerungsvorrichtung 6 mitgeteilt. In Abhängigkeit von der gemessenen Verlagerungsstrecke sowie zuvor festgelegten und in der Getriebesteuerungseinrichtung abgelegten Geschwindigkeits- und Lastschwellen, wird der Kupplungsdruck von der Getriebesteuerungseinrichtung durch die elektrohydraulische Steuerungseinrichtung 20 soweit abgesenkt, bis die Kupplung 7 zu schleifen beginnt Der freiwählbare Schubwert, bei dem der Fahrabkoppler aktiviert wird, wird von der Getriebesteuerungseinrichtung 6 in Abhängigkeit von der Fahrzeugverzögerung eingeregelt (zum Beispiel hohe Bremsverzögerungen = hohe Aggregatauslenkungen).

Beim Unterschreiten einer zuvor festgelegten Fahrzeuggrenzgeschwindigkeit und/oder beim Überschreiten einer zuvor festgelegten Fahrzeugverzögerung wird der Kupplungsdruck der Fahrkupplung so geregelt, daß die Antriebseinrichtung in die Nähe ihrer Nullauslenkung gebracht wird. Kommt das Fahrzeug nun zum Stillstand, befindet sich die Antriebseinrichtung bereits in ihrer minimalen Verspannungsposition. Wenn der Fahrer nun abschließend den Gangwahlhebel in die Neutralposition bewegt wird die Fahrkupplung 7 drucklos geschaltet und der Ausschaltruck ist nicht mehr spürbar.

In einer stark vereinfachten Ausführungsform des erfindungsgemäßen Verfahrens und der erfindungsgemäßen Vorrichtung läßt sich der Kupplungsdruck der Fahrkupplung 7 dadurch im Bereich des zuvor festgelegten Schleifpunktes absenken, daß durch einfaches gesteuertes Ein- und Ausschalten des elektrohydraulischen Ventils der Fahrkupplung ein mittlerer Steuerdruck einstellbar ist, der unter dem Hauptdruckniveau der elektrohydraulischen Steuerungseinrichtung liegt. Der gewünschte Steuerdruck für die Fahrkupplung ist dabei lediglich abhängig vom Hauptdruckniveau, den Kaskaden und dem Tastverhältnis für das Fahrkupplungsventil. Die Höhe des Drucks für die Fahrkupplung muß dabei lediglich so definiert werden, daß sich die Kupplung im bzw. kurz oberhalb des Schleifpunktes befindet und nur noch ein geringes Moment übertragen kann.

Der Vorteil dieser Verfahrensvariante ist darin zusehen, daß bei einer vorgegebenen konventionellen Steuerungseinrichtung für ein Automatikgetriebe kein zusätzlicher Sensorbedarf nötig und nur ein minimaler Änderungsaufwand für eine vorhandene Getriebesteuerungssoftware notwendig ist.

### BEZUGSZEICHENLISTE

- 1: Antriebsmotor
- 1': ausgelenkter Antriebsmotor
- 2: Getriebe
- 3: Differentialgetriebe
- 4: Antriebsrad
- 5: Antriebsrad
- 6: Getriebesteuerungseinrichtung
- 7: Fahrkupplung
- 8: Stützlager
- 9: Stützlager
- 10: Karosserie
- 11: Antriebswelle
- 12: Antriebswelle
- 13: Wegsensor
- 14: Bremslichtschalter
- 15: Drosselklappenwinkelsensor
- 16: Verlagerungsstrecke
- 17: Drehmomentsensor
- 18: Radbremse
- 19: Radbremse
- 20: elektrohydraulische Steuerungseinrichtung
- V: Geschwindigkeit
- V̇: Beschleunigung

## Patentansprüche

1. Verfahren zur geregelten Zu- und Abkopplung der Fahrkupplung (7) im Getriebe einer aus einem Motor (1) und einem elektrohydraulisch betätigbaren Automatikgetriebe (2) bestehenden Antriebseinrichtung eines Kraftfahrzeuges,
dadurch gekennzeichnet,
daß als eine die Verspannung zwischen der Antriebseinrichtung (1, 2) und der Karosserie (10) repräsentierende Größe die Verlagerungsstrecke zwischen der Antriebseinrichtung und der Karosserie, das Abtriebsdrehmoment des Getriebes oder die Information über die Stützkraft in den Stützlagern (8, 9) der Antriebseinrichtung gemessen und einer Getriebesteuerungseinrichtung (6) zugeleitet wird,
wobei beim Stillstand des Kraftfahrzeuges, eingelegtem Gang sowie bei gebremsten Antriebsrädern,
oder beim Stillstand des Kraftfahrzeuges mit ausgekuppeltem Gang oder beim Verzögern des Kraftfahrzeuges bis zum Stillstand mit eingelegtem Gang und beim Unterschreiten einer festgelegten Geschwindigkeits- und Lastschwelle,
der Steuerdruck in der Fahrkupplung (7) des Getriebes in Abhängigkeit von dem ermittelten Verspannungswert von der Getriebesteuerungseinrichtung (6) derart eingestellt wird, daß die Fahrkupplung (7) zu schleifen beginnt.

2. Verfahren nach Anspruch 1, dadurch gekennzeichnet, daß diejenige Getriebekupplung als Fahrkupplung geregelt wird, die den gerade eingelegten Gang schaltet.

3. Verfahren nach den Ansprüchen 1 bis 2, dadurch gekennzeichnet, daß das Schleifmoment der Fahrkupplung frei vorwählbar ist und in der Getriebesteuerungseinrichtung (6) abgespeichert wird.

4. Verfahren nach den Ansprüchen 1 bis 3, dadurch gekennzeichnet, daß das Schleifmoment derart vorgewählt wird, daß durch Messung der Verlagerungsstrecke (16), des Abtriebsdrehmomentes des Getriebes (2) oder der Stützkraft gerade eine geringe Verspannung zwischen der Antriebseinrichtung (1, 2) und der Karosserie (10) meßbar ist.

5. Verfahren nach Anspruch 4, dadurch gekennzeichnet, daß die die Verspannung repräsentierende Größe von der Getriebesteuerungseinrichtung (6) in festen Zeit- und/oder Fahrleistungsintervallen ermittelt wird, wobei der Verlagerungsweg (16) der Antriebseinrichtung (1, 2) bei vollständig geöffneter und vollständig geschlossener Fahrkupplung (7) festgestellt wird.

6. Verfahren nach einem oder mehreren der Ansprüche 1 bis 5, dadurch gekennzeichnet, daß beim Einlegen eines Ganges aus dem Leerlauf heraus und bei gleichzeitigem Stillstand des Fahrzeuges die bis dahin geöffnete Fahrkupplung (7) so weit geschlossen wird, bis das zuvor festgelegte Schleifmoment der Fahrkupplung von der Getriebesteuerungseinrichtung an der einsetzenden Auslenkung der Antriebseinrichtung erkannt wird.

7. Verfahren nach einem oder mehreren der Ansprüche 1 bis 6, dadurch gekennzeichnet, daß bei eingelegtem Gang und nach dem Lösen der Bremse der Druck der Fahrkupplung über eine Zeitrampe langsam angehoben wird, deren Steigung vom über das Fahrpedal oder von dem über den Drosselklappenwinkel signalisierten Fahrleistungswunsch des Fahrers abhängt.

8. Verfahren nach einem oder mehreren der Ansprüche 1 bis 8, dadurch gekennzeichnet, daß zur Reduzierung des Steuerdruckes der Fahrkupplung das Hauptdruckniveau der elektrohydraulischen Steuerungseinrichtung (20) des Getriebes (2) durch gesteuertes Ein- und Ausschalten des Steuerventils der Fahrkupplung (7) von dem Hauptdruckniveau auf den Schleifdruck abgesenkt wird.

9. Vorrichtung zur Durchführung des Verfahrens nach den Ansprüchen 1 bis 8, umfassend eine aus einem Antriebsmoter (1) und einem Automatikgetriebe (2) bestehenden Antriebseinrichtung, die über elastische Stützlager (8, 9) mit der Karosserie (10) des Kraftfahrzeuges verbunden ist, ein der Antriebseinrichtung (1,2) nachgeordnetes Differenzialgetriebe (3), von dem Achswellen (11, 12) abzweigen, welche über Radbremsen (18, 19) mit vorzugsweise zwei Antriebsrädern (4, 5) verbunden sind, und eine Getriebesteuerungseinrichtung (6), die mit einer elektrohydraulischen Steuerungseinrichtung (20) zur Betätigung der Stellglieder des Getriebes (2) in Verbindung steht,
dadurch gekennzeichnet,
daß die Getriebesteuerungseinrichtung (6) über Steuer- und/oder Datenleitungen mit einem Wegsensor (13) zur Messung der Verlagerung der Antriebseinrichtung (1, 2) gegen die Karosserie (10) oder mit einem Drehmomentsensor (17) an der Abtriebswelle des Getriebes (2) oder mit einem Sensor zur Messung der Stützlagerkraft in oder an den Stützlagern (8, 9), sowie mit einem Drosselklappenwinkelsensor (15) an der Motordosselklappe, mit einem Bremslichtschalter (14) und mit einem Meßgeber für die Fahrzeuggeschwindigkeit (V) verbunden ist.

10. Vorrichtung nach Anspruch 9, dadurch gekennzeichnet, daß anstelle des Drehmomentsensors (17) ein Drehzahlsensor am Sonnenrad des als Planetenwechselgetriebe ausgebildeten Getriebes (2) angeordnet ist.

## Claims

1. Method for controlling the engaging and disengaging of the drive coupling (7) in the transmission of a drive unit of a motor vehicle consisting of a motor (1) and an electro-hydraulic automatic transmission (2), characterised in that as a variable representing the stress between the drive unit (1,2) and the bodywork (10), the displacement path between the drive unit and the bodywork, the output torque of the transmission or information regarding the supporting force in the support bearings (8,9) of the drive unit, is measured and directed to a transmission control device (6), wherein
in the case of a stationary motor vehicle in which a gear is engaged and the brakes have been applied to the drive wheels,
or in the case of a stationary motor vehicle having a disengaged gear,
or when retarding the motor vehicle towards becoming stationary with an engaged gear and when not achieving a predetermined velocity and load threshold,
the control pressure in the drive coupling (7) of the transmission is adjusted as a function of the determined stress value by the transmission control device (6) in such a manner that the drive coupling (7) begins to slip.

2. Method according to claim 1, characterised in that the particular transmission coupling which switches the gear just engaged is controlled as the drive coupling.

3. Method according to claims 1 to 2, characterised in that the slip moment of the drive coupling can be freely selected in advance and is stored in the transmission control device (6).

4. Method according to the claims 1 to 3, characterised in that the slip moment is pre-selected in such a manner that by measuring the displacement path (16) of the output torque of the transmission (2) or the supporting force it is in particular possible to measure a small stress between the drive unit (1,2) and the bodywork (10).

5. Method according to claim 4, characterised in that the value representing the stress is determined by the transmission control device (6) in fixed time and/or driving output intervals, wherein the displacement path (16) of the drive device (1,2) is established when the drive coupling is fully open and fully closed.

6. Method according to any one or several of claims 1 to 5, characterised in that when engaging a gear from idling and when the motor vehicle is simultaneously at a standstill the drive coupling (7) which was previously open is now closed to the extent that the previously established slip moment of the drive coupling is recognised by the transmission control device at the commencement of the deflection of the drive unit.

7. Method according to any one or several of claims 1 to 6, characterised in that in the case of an engaged gear and after releasing the brake the pressure of the drive coupling is raised slowly over a time ramp which inclines in dependence upon the driving output desired by the driver and signalled by way of the accelerator pedal or by way of the restrictor flap angle.

8. Method according to any one or several of claims 1 to 8, characterised in that for the purpose of reducing the control pressure of the drive coupling, the main pressure level of the electro-hydraulic control device (20) of the transmission (2) is reduced from the main pressure level to the slip pressure by virtue of engaging and disengaging in a controlled manner the control valve of the drive coupling (7).

9. Device for the purpose of carrying out the method according to claims 1 to 8, including a drive device consisting of a drive motor (1) and an automatic transmission (2), which drive unit is connected by way of an elastic support bearing (8,9) to the bodywork (10) of the motor vehicle, a differential transmission (3) connected downstream of the drive unit (1,2), from which differential transmission axle shafts (11,12) branch off, which axle shafts are connected by way of the wheel brakes (18,19) to preferably two drive wheels (4,5), and a transmission control unit (6), which is connected to an electro-hydraulic control device (20) for the purpose of actuating the adjusting members of the transmission (2), characterised in that the transmission control device (6) is connected by way of the control and/or data line to a displacement sensor (13) for the purpose of measuring the displacement of the drive unit (1,2) with respect to the bodywork (10) or to a torque sensor (17) at the output shaft of the transmission (2) or to a sensor for the purpose of measuring the support bearing force in or at the support bearings (8,9) as well as to a restrictor flap angle sensor (15) at the motor restrictor flap, to a braking light switch (14) and to a measurement indicator for the motor vehicle velocity (V).

10. Device according to claim 9, characterised in that in place of the torque sensor (17) a rotational speed sensor is disposed at the sun wheel of the transmission (2) which is in the form of a planetary gear change box.

## Revendications

1. Procédé pour le réglage de l'enclenchement et du déclenchement de l'embrayage (7) dans le fonctionnement d'un système de transmission d'un véhicule à moteur, se composant d'un moteur (1) et d'une boîte de vitesses automatique (2), pouvant être actionnée de façon électro-hydraulique, procédé caractérisé en ce que l'on mesure, en tant que grandeur représentant le gauchissement entre le système de transmission (1,2) et la carrosserie (10), l'amplitude du décalage entre le système de transmission et la carrosserie, le couple de rotation à la sortie de la boîte de vitesses, ou l'information relative à la force qui s'exerce sur les supports (8,9) du système de transmission et on fournit ces mesures à un système de commande (6) de la boîte de vitesses,
la pression de commande dans l'embrayage (7) de la boîte de vitesses étant réglée en fonction de la valeur du gauchissement détectée par le système de commande (6) de la boîte de vitesses de telle sorte que l'embrayage (7) commence à patiner
alors que le véhicule est à l'arrêt, avec une vitesse enclenchée et les roues motrices freinées
ou que le véhicule est à l'arrêt avec les vitesses débrayées
ou que le véhicule ralentit jusqu'à l'arrêt avec une vitesse enclenchée et passe en dessous d'un seuil de vitesse et de charge déterminé.

2. Procédé selon la revendication 1, caractérisé en ce qu'on règle en tant qu'embrayage l'accouplement dans la boîte de vitesses, qui enclenche justement la vitesse mise.

3. Procédé selon les revendications 1 et 2, caractérisé en ce que l'on peut choisir au préalable librement le couple de patinage de l'embrayage et le mettre en mémoire dans le système de commande (6) de la boîte de vitesses.

4. Procédé selon les revendications 1 à 3, caractérisé en ce que l'on choisit à l'avance le couple de patinage de telle façon que l'on puisse précisément mesurer un gauchissement minime entre le système de transmission (1,2) et la carrosserie (10), en mesurant l'amplitude du décalage (16), le couple de rotation à la sortie de la boîte de vitesses (2) ou la force qui s'exerce sur les supports (8,9)

5. Procédé selon la revendication 4, caractérisé en ce que la grandeur qui représente le gauchissement est détectée par le système de commande (6) de la boîte de vitesses à des intervalles de temps fixes ou et/ou à des intervalles fixes de la puissance de marche, l'amplitude du décalage (16) du système de transmission (1,2) étant déterminée quand l'embrayage (7) est complètement ouvert et quand il est complètement fermé.

6. Procédé selon une ou plusieurs des revendications 1 à 5, caractérisé en ce qu'on ferme l'embrayage (7), jusque là ouvert, une vitesse étant enclenchée à partir du point mort et le véhicule étant en même temps à l'arrêt, jusqu'à ce que le système de commande de la boîte de vitesses ait détecté le couple de patinage, déterminé auparavant, de l'embrayage au décalage du système de transmission à intervenir.

7. Procédé selon une ou plusieurs des revendications 1 à 6, caractérisé en ce que, quand une vitesse est enclenchée et après avoir relâché les freins, la pression de l'embrayage augmente lentement sur une rampe de temps, dont la pente dépend de la puissance que le conducteur souhaite avoir et qui est signalée par la pédale d'accélérateur ou par l'angle de rotation du clapet d'étranglement.

8. Procédé selon une ou plusieurs des revendications 1 à 7, caractérisé en ce que, pour réduire la pression de commande de l'embrayage, on abaisse le niveau de pression principal du système de commande électro-hydraulique (20) de la boîte de vitesses (2) par l'enclenchement ou le déclenchement commandé de la vanne de commande de l'embrayage (7) en l'amenant du niveau de pression principal à la pression de patinage.

9. Dispositif pour la mise en oeuvre du procédé selon les revendications 1 à 8, comprenant un système de transmission se composant d'un moteur d'entraînement (1) et d'une boîte de vitesses automatique (2), système qui est relié par des supports élastiques (8,9) à la carrosserie (10) du véhicule à moteur, un différentiel (3) disposé après le système de transmission (1,2) duquel partent des arbres de transmission (11,12), qui sont reliés de préférence aux deux roues motrices (4, 5) par l'intermédiaire des freins de roue (18, 19) et un système de commande (6) de la boîte de vitesses, qui est en liaison avec un système de commande électro-hydraulique (20) qui sert à actionner les organes de réglage de la boîte de vitesses (2), dispositif caractérisé en ce que le système de commande (6) de la boîte de vitesses est relié par l'intermédiaire de lignes de commande et/ou de lignes de données à un détecteur de course (13) qui sert à mesurer le décalage du système de transmission (1,2) par rapport à la carrosserie (10) ou à un détecteur de couple de rotation (17) sur l'arbre de sortie de la boîte de vitesses (2) ou à un détecteur servant à mesurer les forces d'appui qui s'exercent dans ou sur les supports (8,9), ainsi qu'à un détecteur (15) de l'angle de rotation du clapet d'étranglement monté sur le clapet d'étranglement du moteur, à un interrupteur des signaux lumineux de freinage (14) et à un capteur de mesure de la vitesse (V) du véhicule.

10. Dispositif selon la revendication 9, caractérisé en ce qu'à la place du détecteur du couple de rotation (17) on dispose un détecteur de la vitesse de rotation sur la roue solaire de la boîte de vitesses (2) constituée sous la forme d'une boîte à engrenages planétaires.
